# EUROPEAN PATENT SPECIFICATION

(11) **EP 3 711 982 B1**
(45) Date of publication and mention of the grant of the patent: **22.12.2021**
(21) Application number: 20162768.4
(22) Date of filing: 12.03.2020
(51) Int. Cl.: B60T 7/20, B60T 17/02, B60T 17/04, B60D 1/62, B60T 8/17, B60T 13/26, B60T 13/68

(54) **PNEUMATIC DEVICE CONNECTING A TOWING VEHICLE TO A TRAILER**
PNEUMATISCHES GERÄT ZUM VERBINDEN EINES SCHLEPPFAHRZEUGS MIT EINEM ANHÄNGER
DISPOSITIF PNEUMATIQUE RELIANT UN VÉHICULE DE REMORQUAGE À UNE REMORQUE

(30) Priority: 18.03.2019 IT 201900003919
(43) Date of publication of application: 23.09.2020
(73) Proprietor: SAFIM S.r.l., 41123 Modena (MO) (IT)
(72) Inventor: Mamei, Eronne, 41123 Modena (IT); Mamei, Enrico, 41123 Modena (IT); Mamei, Andrea, 41123 Modena (IT)
(74) Representative: Zoli, Filippo

(56) References cited:
- EP-A1- 3 225 473
- EP-A2- 0 425 462
- DE-A1-102008 054 365
- DE-A1-102014 107 218
- DE-A1-102014 108 558

## Description

As is well known, to date the towing vehicles are connected to the relevant trailers by means of a connecting device which enables the respective braking systems to be put in communication to each other, so that the braking of the towing vehicle actuated by the operator also causes the towing trailer to brake.

The trailer's braking system is then driven by the tractor's braking system in order to synchronize the braking forces acting thereon. One typical example of such a connecting device is known from patent application EP 3 225 473 Al, which discloses the preamble of independent claims 1 and 9.

Both old and new generation pneumatically controlled trailers are provided with a pair of couplings, which can be connected to the respective couplings of the related towing vehicle.

In particular, the pair of couplings with which the towing vehicle is provided can be of different types depending on the country of use; in Italy, for example, a first type of couplings is used for the connection with the old generation trailers and a second type of couplings for the connection with the new generation trailers. Each of these pairs of couplings comprises a supply coupling, connected to a relevant compressed air tank and adapted to fill the trailer's tank, from which a special valve draws pressure to activate the relevant brakes, and a driving coupling adapted to control this valve to modulate the pressure sent to the braking system.

The braking ratios of the old and new generation trailers are different from each other, in particular, in the case of a trailer built according to the previous regulations coupled to a newly built towing vehicle, the pressure supplied by the driving coupling would be insufficient to control the trailer's brakes in good time, with the result that the latter does not brake adequately and thus exerts a pushing action on the tractor.

The main aim of the present invention is to devise a pneumatic device connecting the towing vehicle to the trailer that allows the required braking ratio for each type of trailer to be met.

Within the scope of this aim, one object of the present invention is therefore to devise a device connecting the towing vehicle to the trailer that can be used in the case of both new and old generation trailers, enabling the optimum braking ratio to be achieved in both cases.

Another object of the present invention is to devise a device connecting the towing vehicle to the trailer that allows overcoming the above mentioned drawbacks of the prior art within a simple, rational, easy, effective to use as well as an affordable solution.

The aforementioned objects are achieved by the present device connecting the towing vehicle to the trailer according to claim 1 or, alternatively, the present device connecting the trailer to the towing vehicle according to claim 9.

Other characteristics and advantages of the present invention will be more evident from the description of a preferred, but not exclusive, embodiment of a pneumatic device connecting the towing vehicle to the trailer, illustrated by way of an indicative, but not limiting, example in the attached tables of drawings in which:
Figure 1 is a schematic representation of a device according to the invention in a first embodiment;
Figure 2 is a schematic representation of a device according to the invention in the first embodiment, provided with two pairs of couplings;
Figure 3 is a schematic representation of a device according to the invention, in a second embodiment;
Figure 4 is a schematic representation of a device according to the invention in the second embodiment, provided with two pairs of couplings.

With particular reference to these figures, reference number 1 globally indicates a pneumatic device connecting the towing vehicle to the trailer.

The device 1 comprises at least one first pair of couplings 2a, 2b connectable to a first type of vehicles and one pair of second couplings 3a, 3b connectable to a second type of vehicles, where each of these pairs of couplings 2a, 2b, 3a, 3b comprises at least one supply coupling 2a, 3a and at least one driving coupling connectable to the braking system F_{T}, F_{R} of the relevant vehicle.

In particular, the first pair of couplings 2a, 2b comprises a first supply coupling 2a and a first driving coupling 2b, and the pair of second couplings 3a, 3b comprises a second supply coupling 3a and a second driving coupling 3b.

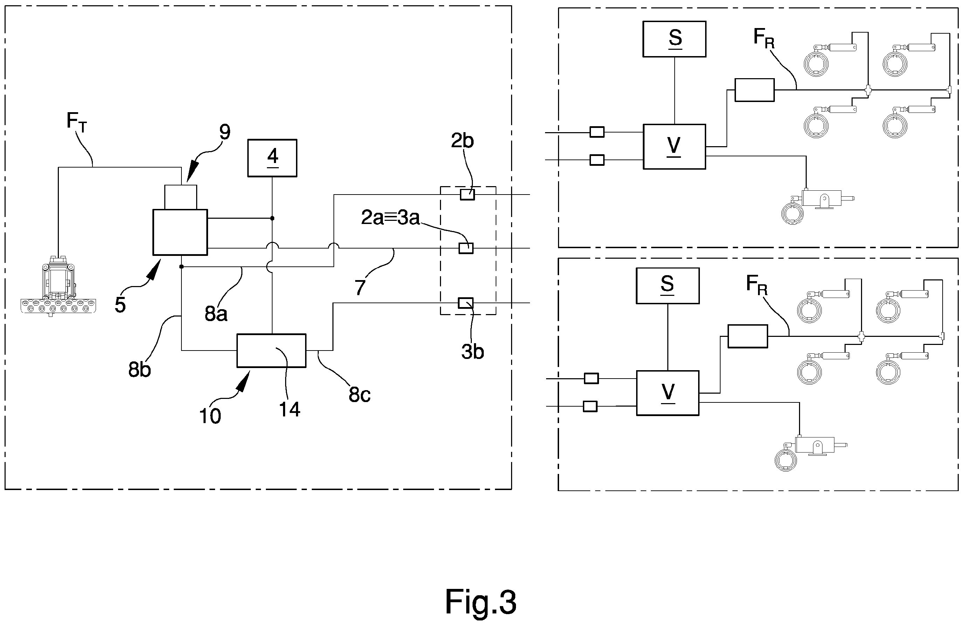

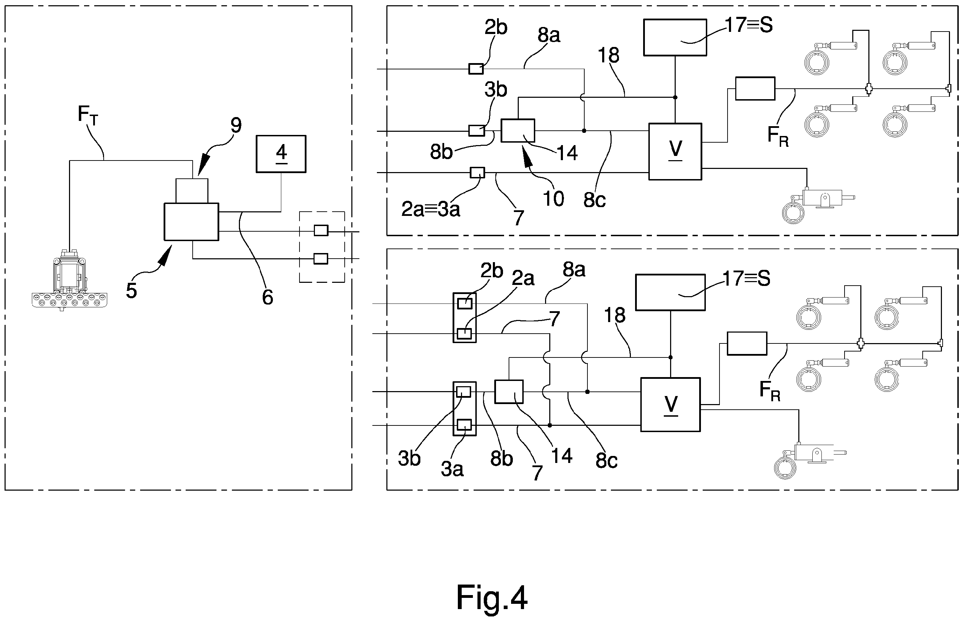

In some embodiments, such as those shown in Figures 3 and 4, the first and the second supply couplings 2a and 3a coincide with each other.

More particularly, the pair of first couplings 2a, 2b is intended for connection to a new generation vehicle, while the pair of second couplings 3a, 3b is intended for connection to old generation vehicles. The supply couplings 2a, 3a are adapted to supply a reservoir S present on the trailer by means of a relevant valve V, while the driving couplings 2b, 3b are adapted to send to valve V a signal proportionate to the pressure present along the braking system F_{T} of the towing vehicle so that the valve itself can modulate the pressure supplied by the reservoir S to the braking system F_{R} of the trailer.

The device 1 then comprises a tank 4,17 of compressed air, at least one supply line 7 connected to the supply couplings 2a, 3a and at least one control line 8 connected to the driving couplings 2b, 3b.

According to the invention, the device 1 comprises pressure variation means 10 along the control line 8 that can be activated/deactivated as a result of the connection/disconnection of the pair of second couplings 3a, 3b to/from the relevant vehicle.

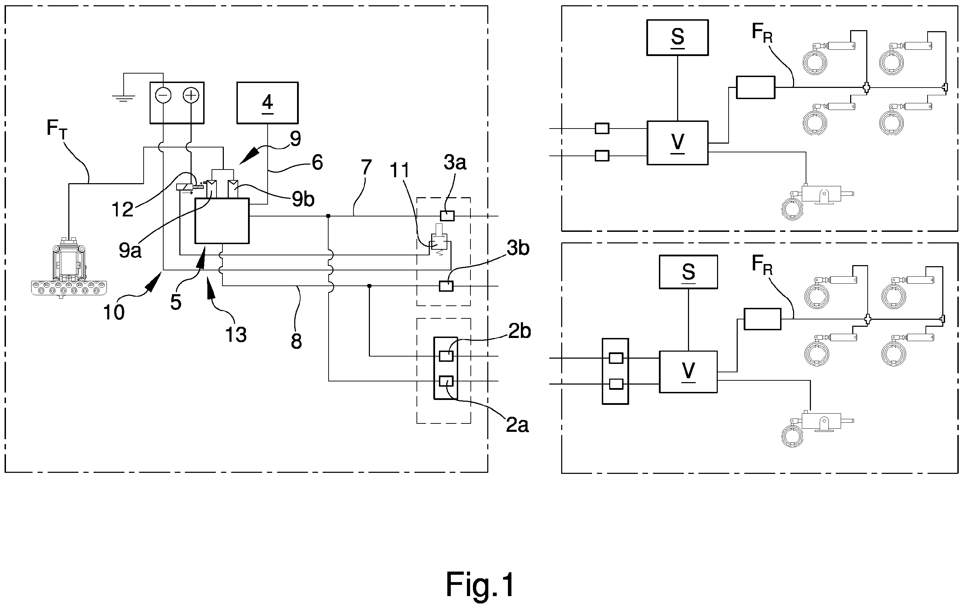

The device 1 can be associated with a towing vehicle (as in the embodiments shown in Figures 1, 2 and 3), in which case the relevant pairs of couplings 2a, 2b and 3a, 3b can be connected, respectively, to a first and to a second type of trailers, or to a trailer (as in the embodiment shown in Figure 4), in which case the relevant pairs of couplings 2a, 2b and 3a, 3b can be connected, respectively, to a first and a second type of towing vehicle.

In the event of the device 1 being associated with a towing vehicle (Figures 1, 2 and 3), the tank 4,17 comprises at least one towing tank 4 and at least one trailer-brake valve 5 is provided comprising a body in which at least one seat is formed (not visible in detail in the figures) communicating with at least one loading line 6 connected to the towing tank 4, with at least the supply line 7, which in turn is communicating with the loading line 6, and with the control line 8.

Inside the seat a distributor (also not visible in detail in the figures) is housed in a sliding manner, which can be moved at least to put the loading line 6 in communication with the control line 8, to vary the compressed air flow rate, and therefore pressure, inside the control line itself.

The device 1 then comprises driving means 9 of the distributor, operationally connected to the braking system F_{T} of the towing vehicle and adapted to move the distributor itself to increase or decrease the passage gap of the compressed air coming from the loading line 6 towards the control line 8 as the pressure in the braking system F_{T} of the towing vehicle increases and decreases, respectively.

In the embodiment of Figure 1, in which the device 1 is associated with a towing vehicle, the variation means 10 are operationally connected to the driving means 9.

Advantageously, in the embodiment of Figure 1, the driving means 9 of the distributor are provided with at least a first and a second driving element, identified in the figures with the reference numerals 9a and 9b, wherein the variation means 10 are operationally connected to one of the driving elements 9a, 9b and are adapted to allow the displacement of both driving elements 9a, 9b with the pair of second couplings 3a, 3b connected to the relevant trailer and to block the displacement of one of the driving elements 9a, 9b when the pair of second couplings 3a, 3b is disconnected from the relevant trailer. In this embodiment, the control line 8 is put in communication with both driving couplings 2b, 3b. This way, the thrust area of the driving elements 9a, 9b, and therefore the force exerted on the distributor, changes depending on whether the pair of first couplings 2a, 2b or the pair of second couplings 3a, 3b is connected to the trailer, thus varying the pressure along the control line 8 accordingly.

In this case the thrust area of the driving elements 9a, 9b and therefore the force exerted on the distributor changes depending on whether the pair of first couplings 2a, 2b or the pair of second couplings 3a, 3b is connected to the trailer.

Advantageously, the variation means 10 comprise command means 11 which can be operated due to the connection of the pair of second couplings 3a, 3b to a relevant trailer and at least one blocking element 12 which is operationally connected to the command means 11 and moveable between an interference position, wherein it prevents the displacement of one of the driving elements 9a, 9b, and a release position, wherein it allows the displacement of both the driving elements 9a, 9b. The command means 11 are adapted to move the blocking element 12 to the release position as a result of the connection of the pair of second couplings 3a, 3b with the relevant trailer.

In the embodiment shown in Figure 1, the blocking element 12 is adapted to interact with the driving element 9a.

Therefore, when the pair of first couplings 2a, 2b is connected to the relevant trailer, the command means 11 keep the blocking element 12 in the interference position, so only the driving element 9b acts on the distributor.

When, on the other hand, the pair of second couplings 3a, 3b is connected to the relevant trailer, the command means 11 displace the blocking element 12 from the interference position to the release position, so that both the driving elements 9a, 9b act on the distributor. This makes it possible to increase, compared to the case wherein the pair of first couplings 2a, 2b is connected to the trailer, the pressure along the control line 8 the same pressure in the braking system F_{T} of the towing vehicle being equal.

Preferably, the command means 11 are of the electrical type.

More particularly, in the embodiment of Figure 1, the command means 11 comprise at least one switch of the ON-OFF type, which is operationally connected to the blocking element 12 by means of an electrical circuit 13. The switch 11 is adapted to close the circuit 13 as a result of the connection of the pair of second couplings 3a, 3b to the relevant trailer, thus causing the blocking element 12 to be displaced to the release position.

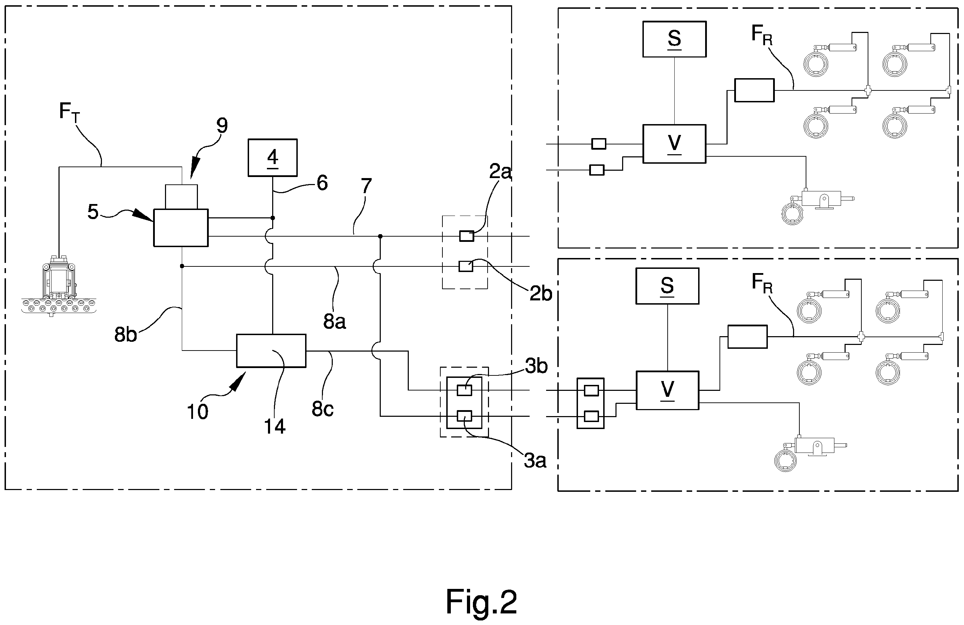

In the embodiments shown in Figures 2 to 4, on the other hand, the variation means 10 comprise valve means 14 communicating with the tank 4,17 by means of at least one braking line 18 and the control line 8 comprises a first control line 8a connected to the driving coupling 2b and a second control line 8b,8c provided with at least a first stretch 8b connected at input to the valve means 14 of at least one second stretch 8c connected at output to the valve means 14, wherein one of the first stretch 8b and the second stretch 8c is communicating with the first control line 8a and the other is communicating with the second driving coupling 3b. In particular, the valve means 14 are adapted to allow the passage of the compressed air from the braking line 18 towards the second stretch 8c with a predefined pressure ratio with respect to the pressure along the first stretch 8b.

In other words, the valve means 14 are adapted to send to the second stretch 8c a pressure corresponding to the pressure present along the first stretch 8b increased by a predefined value, so as to cause a faster increase in pressure along the braking system F_{R} of the trailer.

For example, the valve means 14 are of the type of an amplifier relay.

In the embodiment shown in Figure 2, in which the pairs of first and second couplings 2a, 2b and 3a, 3b are applied to the towing vehicle and are provided: the towing tank 4 and the trailer-brake valve 5 as described above, the braking line 18 corresponds to the loading line 6, the first stretch 8b is communicating with the first control line 8a upstream of the valve means 14 (with respect to the direction of forward movement of the compressed air) and the second stretch 8c is communicating with the second driving coupling 3b.

The embodiment shown in Figure 3 substantially corresponds to that in Figure 2, wherein the first and the second supply couplings 2a and 3a are coincident with each other.

In the embodiment of Figure 4, in which both the solution with the first supply coupling 2a separate from the second supply coupling 3a is represented as well as the solution in which the supply couplings 2a and 3a are coincident with each other, the pair of first couplings 2a, 2b and the pair of second couplings 3a, 3b are associated with a trailer. In particular, the pair of first couplings 2a, 2b is associable with a first type of towing vehicles and the pair of second couplings 3a, 3b is associable with a second type of towing vehicles. In this case, the tank 4,17 comprises at least a trailer tank 17 and the braking line 18 is placed between the trailer tank 17 and the valve means 14. In addition, the first stretch 8b is communicating with the second driving coupling 3b and the second stretch 8c is communicating with the first control line 8a downstream of the valve means 14 (with respect to the direction of forward movement of the compressed air). This way, if the pair of second couplings 3a, 3b is connected to the relevant towing vehicle, the compressed air that is sent to the valve V is increased by a predefined value with respect to the compressed air that passes through the second driving coupling 3b. If, on the other hand, the pair of second driving couplings 3a, 3b is disconnected from the relevant towing vehicle, the valve means 14 are by-passed and the first control line 8a directly supplies the valve V.

It has in practice been found that the described invention achieves the intended objects and in particular the fact is underlined that the pneumatic device connecting the towing vehicle to the trailer which the present invention relates to, allows varying the braking rate depending on the type of trailer connected. In particular, the device according to the invention allows increasing the pressure sent to the trailer's braking system, acting on the driving means or through a relay valve, when an old generation vehicle is used.

## Claims

1. Pneumatic device (1) connecting the towing vehicle to the trailer, comprising:
- at least one pair of first couplings (2a, 2b) connectable to a first type of vehicles and one pair of second couplings (3a, 3b) connectable to a second type of vehicles, where each of said pairs of couplings (2a, 2b, 3a, 3b) comprises at least one supply coupling (2a, 3a) and at least one driving coupling (2b, 3b) connectable to the braking system (F_{T}, F_{R}) of the relevant vehicle;
- at least one tank (4, 17) of compressed air;
- at least one supply line (7) connected to said supply couplings (2a, 3a) and at least one control line (8) connected to said driving couplings (2b, 3b);
- pressure variation means (10) along said control line (8) that can be activated/deactivated as a result of the connection/disconnection of said pair of second couplings (3a, 3b) to/from the relevant vehicle;
**characterized by** the fact that said pair of first and said pair of second couplings (2a, 2b, 3a, 3b) are associated with a towing vehicle, where said pair of first couplings (2a, 2b) is connectable to a first type of trailers and said pair of second couplings (3a, 3b) is connectable to a second type of trailers,
by the fact that said at least one tank (4, 17) comprises at least one towing tank (4)
and by the fact that it comprises:
- a trailer-brake valve (5) comprising a body in which there is at least one seat communicating with at least one loading line (6) connected to said towing tank (4), with said supply line (7), the latter being in turn communicating with said loading line (6), and with said control line (8);
- at least one distributor housed in a sliding manner inside said seat and movable at least to put said loading line (6) in communication with said control line (8);
driving means (9) of said distributor, operationally connected to the braking system (Fv) of the towing vehicle and adapted to move said distributor to increase or decrease the passage gap of the compressed air coming from said loading line (6) towards said control line (8) to increase and decrease respectively the pressure in the braking system (F_{T}) of the towing vehicle.

2. Device (1) according to claim 1, **characterized by** the fact that said variation means (10) are operationally connected to said driving means (9).

3. Device (1) according to claim 2, **characterized by** the fact that said driving means (9) comprise at least a first and a second driving element (9a, 9b), and by the fact that said variation means (10) are operationally connected to one of said driving elements (9a, 9b) and are adapted to allow the displacement of both driving elements (9a, 9b) with said pair of second couplings (3a, 3b) connected to the relevant trailer and to block the displacement of one of said driving elements (9a, 9b) with said pair of second couplings (3a, 3b) disconnected from the relevant trailer, said control line (8) communicating with both said driving couplings (2b, 3b).

4. Device (1) according to claim 3, **characterized by** the fact that said variation means (10) comprise command means (11) which can be operated due to the connection of said pair of second couplings (3a, 3b) to a relevant trailer and at least one blocking element (12) which is operationally connected to said command means (11) and moveable between an interference position, wherein it interacts with one of said driving elements (9a, 9b) to prevent the displacement thereof, and a release position, wherein it allows the displacement of both said driving elements (9a, 9b), where said command means (11) are adapted to move said blocking element (12) in the release position as a result of the connection of said pair of second couplings (3a, 3b) with the relevant trailer.

5. Device (1) according to claim 4, **characterized by** the fact that said command means (11) are of the electrical type.

6. Device (1) according to claim 5, **characterized by** the fact that said command means (11) comprise at least one switch of the ON-OFF type which can be activated due to the connection of at least said second driving coupling (3b) to a relevant trailer to move said blocking element (12) to the release position.

7. Device (1) according to claim 1, **characterized by** the fact that said variation means (10) comprise valve means (14) communicating with said tank (4, 17) by means of at least one braking line (18) and by the fact that said at least one control line (8) comprises a first control line (8a) connected to said first driving coupling (2b) and a second control line (8b), 8c) provided with at least a first stretch (8b) connected at input to said valve means (14) and with at least a second stretch (8c) connected at output to said valve means (14), where one of said first and second stretches (8b, 8c) is communicating with said first control line (8a) and the other is communicating with said second driving coupling (3b), said valve means (14) being adapted to allow the passage of the compressed air from said braking line (18) towards said second stretch (8c) with a predefined pressure ratio with respect to the pressure along said first stretch (8b).

8. Device (1) according to claims 1 and 7, **characterized by** the fact that said braking line (18) corresponds to said loading line (6), by the fact that said first stretch (8b) is communicating with said first control line (8a) upstream of said valve means (14) and by the fact that said second stretch (8c) is communicating with said second driving coupling (3b).

9. Pneumatic device (1) connecting the towing vehicle to the trailer, comprising:
- at least one pair of first couplings (2a, 2b) connectable to a first type of vehicles and one pair of second couplings (3a, 3b) connectable to a second type of vehicles, where each of said pairs of couplings (2a, 2b, 3a, 3b) comprises at least one supply coupling (2a, 3a) and at least one driving coupling (2b, 3b) connectable to the braking system (F_{T}, F_{R}) of the relevant vehicle;
- at least one tank (4, 17) of compressed air;
- at least one supply line (7) connected to said supply couplings (2a, 3a) and at least one control line (8) connected to said driving couplings (2b, 3b);
pressure variation means (10) along said control line (8) that can be activated/deactivated as a result of the connection/disconnection of said pair of second couplings (3a, 3b) to/from the relevant vehicle,
wherein said variation means (10) comprise valve means (14) communicating with said tank (4, 17) by means of at least one braking line (18) and by the fact that said at least one control line (8) comprises a first control line (8a) connected to said first driving coupling (2b) and a second control line (8b), 8c) provided with at least a first stretch (8b) connected at input to said valve means (14) and with at least a second stretch (8c) connected at output to said valve means (14), where one of said first and second stretches (8b, 8c) is communicating with said first control line (8a) and the other is communicating with said second driving coupling (3b), said valve means (14) being adapted to allow the passage of the compressed air from said braking line (18) towards said second stretch (8c) with a predefined pressure ratio with respect to the pressure along said first stretch (8b) **characterized by** the fact that said first and said pair of second couplings (2a, 2b, 3a, 3b) are associated with a trailer, where said pair of first couplings (2a, 2b) is connectable to a first type of towing vehicles and said pair of second couplings (3a, 3b) is connectable to a second type of towing vehicles, by the fact that said at least one tank (4, 17) comprises at least one trailer tank (17), where said braking line (18) is placed between said trailer tank (17) and said valve means (14) and by the fact that said first stretch (8b) is communicating with said second driving coupling (3b) and that said second stretch (8c) is communicating with said first control line (8a) downstream of said valve means (14).

10. Device (1) according to one or more of claims 7 to 9, **characterized by** the fact that said valve means (14) are adapted to send to said second stretch (8c) a pressure corresponding to the pressure present along said first stretch (8b) increased by a predefined value.

11. Device (1) according to claim 10, **characterized by** the fact that said valve means (14) are of the type of an amplifier relay valve.

## Patentansprüche

1. Pneumatische Vorrichtung (1), die das Zugfahrzeug mit dem Anhänger verbindet, umfassend:
- mindestens ein Paar erster Kupplungen (2a, 2b), die mit einem ersten Typ von Fahrzeugen verbindbar sind, und ein Paar zweiter Kupplungen (3a, 3b), die mit einem zweiten Typ von Fahrzeugen verbindbar sind, wobei jedes der Kupplungspaare (2a, 2b, 3a, 3b) mindestens eine Versorgungskupplung (2a, 3a) und mindestens eine Antriebskupplung (2b, 3b) umfasst, die mit dem Bremssystem (Ft, Fr) des betreffenden Fahrzeugs verbindbar sind;
- mindestens einen Tank (4, 17) für Druckluft;
- mindestens eine Versorgungsleitung (7), die mit den Versorgungskupplungen (2a, 3a) verbunden ist, und mindestens eine Steuerleitung (8), die mit den Antriebskupplungen (2b, 3b) verbunden ist;
- Druckvariationsmittel (10) entlang der Steuerleitung (8), die als Ergebnis der Verbindung/Trennung des Paars zweiter Kupplungen (3a, 3b) mit/von dem betreffenden Fahrzeug aktiviert/deaktiviert werden können;
**dadurch gekennzeichnet, dass** das Paar erster und das Paar zweiter Kupplungen (2a, 2b, 3a, 3b) mit einem Zugfahrzeug verbunden sind, wobei das Paar erster Kupplungen (2a, 2b) mit einem ersten Typ von Anhängern und das Paar zweiter Kupplungen (3a, 3b) mit einem zweiten Typ von Anhängern verbindbar ist,
dadurch, dass der mindestens eine Tank (4, 17) mindestens einen Zugtank (4) umfasst und dadurch, dass sie umfasst:
- ein Anhängerbremsventil (5), das einen Körper umfasst, in dem sich mindestens ein Sitz befindet, der mit mindestens einer mit dem Zugtank (4) verbundenen Ladeleitung (6) verbunden ist, mit der Versorgungsleitung (7), die ihrerseits mit der Ladeleitung (6) verbunden ist, und mit der Steuerleitung (8);
- mindestens einen Verteiler, der gleitend im Inneren des Sitzes untergebracht und beweglich ist, um zumindest die Ladeleitung (6) mit der Steuerleitung (8) zu verbinden;
Antriebsmittel (9) des Verteilers, die funktionell mit dem Bremssystem (Fv) des Zugfahrzeugs verbunden und geeignet sind, den Verteiler zu bewegen, um den Durchgangsspalt der von der Ladeleitung (6) zur Steuerleitung (8) kommenden Druckluft zu vergrößern oder zu verkleinern, um den Druck im Bremssystem (Ft) des Zugfahrzeugs zu erhöhen beziehungsweise zu verringern.

2. Vorrichtung (1) nach Anspruch 1, **dadurch gekennzeichnet, dass** die Variationsmittel (10) funktionell mit den Antriebsmitteln (9) verbunden sind.

3. Vorrichtung (1) nach Anspruch 2, **dadurch gekennzeichnet, dass** die Antriebsmittel (9) mindestens ein erstes und ein zweites Antriebselement (9a, 9b) umfassen, und dadurch, dass die Variationsmittel (10) funktionell mit einem der Antriebselemente (9a, 9b) verbunden sind und geeignet sind, die Verschiebung beider Antriebselemente (9a, 9b) mit dem Paar zweiter Kupplungen (3a, 3b), die mit dem entsprechenden Anhänger verbunden sind, zu ermöglichen und die Verschiebung eines der Antriebselemente (9a, 9b) mit dem Paar zweiter Kupplungen (3a, 3b), die von dem entsprechenden Anhänger getrennt sind, zu blockieren, wobei die Steuerleitung (8) mit beiden Antriebskupplungen (2b, 3b) in Verbindung steht.

4. Vorrichtung (1) nach Anspruch 3, **dadurch gekennzeichnet, dass** die Variationsmittel (10) Befehlsmittel (11) umfassen, die aufgrund der Verbindung des Paars zweiter Kupplungen (3a, 3b) mit einem entsprechenden Anhänger betätigt werden können, und mindestens ein Blockierelement (12), das funktionell mit den Befehlsmitteln (11) verbunden ist und zwischen einer Eingriffsposition, in der es mit einem der Antriebselemente (9a, 9b) zusammenwirkt, um dessen Verschiebung zu verhindern, und einer Freigabeposition, in der es die Verschiebung der beiden Antriebselemente (9a, 9b) ermöglicht, bewegbar ist, wobei die Befehlsmittel (11) geeignet sind, das Blockierelement (12) als Ergebnis der Verbindung des Paars zweiter Kupplungen (3a, 3b) mit dem entsprechenden Anhänger in die Freigabeposition zu bewegen.

5. Vorrichtung (1) nach Anspruch 4, **dadurch gekennzeichnet, dass** die Befehlsmittel (11) von elektrischer Art sind.

6. Vorrichtung (1) nach Anspruch 5, **dadurch gekennzeichnet, dass** die Befehlsmittel (11) mindestens einen Schalter des Typs EIN-AUS umfassen, der aufgrund der Verbindung von mindestens der zweiten Antriebskupplung (3b) mit einem entsprechenden Anhänger aktiviert werden kann, um das Blockierelement (12) in die Freigabeposition zu bewegen.

7. Vorrichtung (1) nach Anspruch 1, **dadurch gekennzeichnet, dass** die Variationsmittel (10) Ventilmittel (14) umfassen, die mit dem Tank (4, 17) über mindestens eine Bremsleitung (18) in Verbindung stehen, und dadurch, dass die mindestens eine Steuerleitung (8) eine erste Steuerleitung (8a), die mit der ersten Antriebskupplung (2b) verbunden ist, und eine zweite Steuerleitung (8b), 8c) umfasst, die mit mindestens einem ersten Abschnitt (8b) versehen ist, der am Eingang mit den Ventilmitteln (14) verbunden ist, und mit mindestens einem zweiten Abschnitt (8c), der am Ausgang mit den Ventilmitteln (14) verbunden ist, wobei einer der ersten und zweiten Abschnitte (8b, 8c) mit der ersten Steuerleitung (8a) und der andere mit der zweiten Antriebskupplung (3b) in Verbindung steht, wobei die Ventilmittel (14) geeignet sind, den Durchgang der Druckluft von der Bremsleitung (18) zu dem zweiten Abschnitt (8c) mit einem vordefinierten Druckverhältnis in Bezug auf den Druck entlang des ersten Abschnitts (8b) zu ermöglichen.

8. Vorrichtung (1) nach den Ansprüchen 1 und 7, **dadurch gekennzeichnet, dass** die Bremsleitung (18) der Ladeleitung (6) entspricht, dass der erste Abschnitt (8b) mit der ersten Steuerleitung (8a) stromaufwärts der Ventileinrichtung (14) in Verbindung steht und dass der zweite Abschnitt (8c) mit der zweiten Antriebskupplung (3b) in Verbindung steht.

9. Pneumatische Vorrichtung (1), die das Zugfahrzeug mit dem Anhänger verbindet, umfassend:
- mindestens ein Paar erster Kupplungen (2a, 2b), die mit einem ersten Typ von Fahrzeugen verbindbar sind, und ein Paar zweiter Kupplungen (3a, 3b), die mit einem zweiten Typ von Fahrzeugen verbindbar sind, wobei jedes der Kupplungspaare (2a, 2b, 3a, 3b) mindestens eine Versorgungskupplung (2a, 3a) und mindestens eine Antriebskupplung (2b, 3b) umfasst, die mit dem Bremssystem (Ft, Fr) des betreffenden Fahrzeugs verbindbar ist;
- mindestens einen Tank (4, 17) für Druckluft;
- mindestens eine Versorgungsleitung (7), die mit den Versorgungskupplungen (2a, 3a) verbunden ist, und mindestens eine Steuerleitung (8), die mit den Antriebskupplungen (2b, 3b) verbunden ist;
Druckvariationsmittel (10) entlang der Steuerleitung (8), die als Ergebnis der Verbindung/Trennung des Paares von zweiten Kupplungen (3a, 3b) mit/von dem betreffenden Fahrzeug aktiviert/deaktiviert werden können, wobei die Variationsmittel (10) Ventilmittel (14) umfassen, die mit dem Tank (4, 17) über mindestens eine Bremsleitung (18) in Verbindung stehen, und dadurch, dass die mindestens eine Steuerleitung (8) eine mit der ersten Antriebskupplung (2b) verbundene erste Steuerleitung (8a) und eine zweite Steuerleitung (8b, 8c) umfasst, die mit mindestens einem ersten Abschnitt (8b) versehen ist, der am Eingang mit den Ventilmitteln (14) verbunden ist, und mit mindestens einem zweiten Abschnitt (8c), der am Ausgang mit den Ventilmitteln (14) verbunden ist, wobei einer der ersten und zweiten Abschnitte (8b, 8c) mit der ersten Steuerleitung (8a) in Verbindung steht und der andere mit der zweiten Antriebskupplung (3b) in Verbindung steht, die Ventilmittel (14) geeignet sind, den Durchgang der Druckluft von der Bremsleitung (18) zu dem zweiten Abschnitt (8c) mit einem vordefinierten Druckverhältnis in Bezug auf den Druck entlang des ersten Abschnitts (8b) zu ermöglichen, **dadurch gekennzeichnet, dass** das Paar erster und das Paar zweiter Kupplungen (2a, 2b, 3a, 3b) mit einem Anhänger verbunden sind, wobei das Paar erster Kupplungen (2a, 2b) mit einem ersten Typ von Zugfahrzeugen verbindbar ist und das Paar zweiter Kupplungen (3a, 3b) mit einem zweiten Typ von Zugfahrzeugen verbindbar ist, dadurch, dass der mindestens eine Tank (4, 17) mindestens einen Anhängertank (17) umfasst, wobei die Bremsleitung (18) zwischen dem Anhängertank (17) und den Ventilmitteln (14) angeordnet ist, und dadurch, dass der erste Abschnitt (8b) mit der zweiten Antriebskupplung (3b) in Verbindung steht und dass der zweite Abschnitt (8c) mit der ersten Steuerleitung (8a) stromabwärts der Ventilmittel (14) in Verbindung steht.

10. Vorrichtung (1) nach einem oder mehreren der Ansprüche 7 bis 9, **dadurch gekennzeichnet, dass** die Ventilmittel (14) geeignet sind, dem zweiten Abschnitt (8c) einen Druck zuzuführen, der dem Druck entspricht, der entlang des ersten Abschnitts (8b) besteht, erhöht um einen vordefinierten Wert.

11. Vorrichtung (1) nach Anspruch 10, **dadurch gekennzeichnet, dass** die Ventilmittel (14) von der Art eines Verstärkerrelaisventils sind.

## Revendications

1. Dispositif pneumatique (1) connectant le véhicule de remorquage à la remorque, comprenant :
- au moins une paire de premiers organes de couplage (2a, 2b) pouvant être connectés à un premier type de véhicules et une paire de seconds organes de couplage (3a, 3b) pouvant être connectés à un second type de véhicules, où chacune desdites paires d'organes de couplage (2a, 2b, 3a, 3b) comprend au moins un organe de couplage d'alimentation (2a, 3a) et au moins un organe de couplage d'entraînement (2b, 3b) pouvant être connectés au système de freinage (F_{T}, F_{R}) du véhicule concerné ;
- au moins un réservoir (4, 17) d'air comprimé ;
- au moins une ligne d'alimentation (7) connectée auxdits organes de couplage d'alimentation (2a, 3a) et au moins une ligne de commande (8) connectée auxdits organes de couplage d'entraînement (2b, 3b) ;
- un moyen de variation de pression (10) le long de ladite ligne de commande (8) qui peut être activé/désactivé à la suite de la connexion/déconnexion de ladite paire de seconds organes de couplage (3a, 3b) au/du véhicule concerné ;
**caractérisé par le fait que** ladite paire de premiers et ladite paire de seconds organes de couplage (2a, 2b, 3a, 3b) sont associées à un véhicule de remorquage, où ladite paire de premiers organes de couplage (2a, 2b) peut être connectée à un premier type de remorques, et ladite paire de seconds organes de couplage (3a, 3b) peut être connectée à un second type de remorques,
**par le fait que** ledit au moins un réservoir (4, 17) comprend au moins un réservoir de remorquage (4)
et **par le fait qu'**il comprend :
- une soupape de frein de remorque (5) comprenant un corps dans lequel il y a au moins un siège communiquant avec au moins une ligne de chargement (6) connectée audit réservoir de remorquage (4), avec ladite ligne d'alimentation (7), cette dernière étant quant à elle en communication avec ladite ligne de chargement (6), et avec ladite ligne de commande (8) ;
- au moins un distributeur logé de manière coulissante à l'intérieur dudit siège et mobile au moins pour mettre ladite ligne de chargement (6) en communication avec ladite ligne de commande (8) ;
un moyen d'entraînement (9) dudit distributeur, fonctionnellement connecté au système de freinage (Fv) du véhicule de remorquage et adapté pour déplacer ledit distributeur pour augmenter ou diminuer le dégagement de passage de l'air comprimé provenant de ladite ligne de chargement (6) vers ladite ligne de commande (8) pour augmenter et diminuer respectivement la pression dans le système de freinage (F_{T}) du véhicule de remorquage.

2. Dispositif (1) selon la revendication 1, **caractérisé par le fait que** ledit moyen de variation (10) est fonctionnellement connecté audit moyen d'entraînement (9).

3. Dispositif (1) selon la revendication 2, **caractérisé par le fait que** ledit moyen de d'entraînement (9) comprend au moins un premier et un second élément d'entraînement (9a, 9b), et **par le fait que** ledit moyen de variation (10) est fonctionnellement connecté à l'un desdits éléments d'entraînement (9a, 9b) et est adapté pour permettre le déplacement des deux éléments d'entraînement (9a, 9b) avec ladite paire de seconds organes de couplage (3a, 3b) connectés à la remorque concernée et pour bloquer le déplacement de l'un desdits éléments d'entraînement (9a, 9b) avec ladite paire de seconds organes de couplage (3a, 3b) déconnectés de la remorque concernée, ladite ligne de commande (8) communiquant avec les deux organes de couplage d'entraînement (2b, 3b).

4. Dispositif (1) selon la revendication 3, **caractérisé par le fait que** ledit moyen de variation (10) comprend un moyen d'instruction (11) qui peut être actionné en raison de la connexion de ladite paire de seconds organes de couplage (3a, 3b) à une remorque concernée et au moins un élément de blocage (12) qui est fonctionnellement connecté audit moyen d'instruction (11) et mobile entre une position d'interférence, dans laquelle il interagit avec l'un desdits éléments d'entraînement (9a, 9b) pour empêcher le déplacement de celui-ci, et une position de libération, dans laquelle il permet le déplacement desdits deux éléments d'entraînement (9a, 9b), où ledit moyen d'instruction (11) est adapté pour déplacer ledit élément de blocage (12) dans la position de libération à la suite de la connexion de ladite paire de seconds organes de couplage (3a, 3b) à la remorque concernée.

5. Dispositif (1) selon la revendication 4, **caractérisé par le fait que** ledit moyen d'instruction (11) est du type électrique.

6. Dispositif (1) selon la revendication 5, **caractérisé par le fait que** ledit moyen d'instruction (11) comprend au moins un commutateur du type ON-OFF qui peut être activé en raison de la connexion d'au moins ledit second organe de couplage d'entraînement (3b) à une remorque concernée pour déplacer ledit élément de blocage (12) vers la position de libération.

7. Dispositif (1) selon la revendication 1, **caractérisé par le fait que** ledit moyen de variation (10) comprend un moyen de soupape (14) communiquant avec ledit réservoir (4, 17) à l'aide d'au moins une ligne de freinage (18) et **par le fait que** ladite au moins une ligne de commande (8) comprend une première ligne de commande (8a) connectée audit premier organe de couplage d'entraînement (2b) et une seconde ligne de commande (8b, 8c) pourvue d'au moins une première extension (8b) connectée au niveau d'une entrée dans ledit moyen de soupape (14) et d'au moins une seconde extension (8c) connectée au niveau d'une sortie dudit moyen de soupape (14), où l'une desdites première et seconde extensions (8b, 8c) communique avec ladite première ligne de commande (8a) et l'autre communique avec ledit second organe de couplage d'entraînement (3b), ledit moyen de soupape (14) étant adapté pour permettre le passage de l'air comprimé de ladite ligne de freinage (18) vers ladite seconde extension (8c) avec un rapport de pression prédéfini par rapport à la pression le long de ladite première extension (8b).

8. Dispositif (1) selon les revendications 1 et 7, **caractérisé par le fait que** ladite ligne de freinage (18) correspond à ladite ligne de chargement (6), **par le fait que** ladite première extension (8b) communique avec ladite première ligne de commande (8a) en amont dudit moyen de soupape (14) et **par le fait que** ladite seconde extension (8c) communique avec ledit second organe de couplage d'entraînement (3b).

9. Dispositif pneumatique (1) connectant le véhicule de remorquage à la remorque, comprenant :
- au moins une paire de premiers organes de couplage (2a, 2b) pouvant être connectés à un premier type de véhicules et une paire de seconds organes de couplage (3a, 3b) pouvant être connectés à un second type de véhicules, où chacune desdites paires d'organes de couplage (2a, 2b, 3a, 3b) comprend au moins un organe de couplage d'alimentation (2a, 3a) et au moins un organe de couplage d'entraînement (2b, 3b) pouvant être connectés au système de freinage (F_{T}, F_{R}) du véhicule concerné ;
- au moins un réservoir (4, 17) d'air comprimé ;
- au moins une ligne d'alimentation (7) connectée auxdits organes de couplage d'alimentation (2a, 3a) et au moins une ligne de commande (8) connectée auxdits organes de couplage d'entraînement (2b, 3b) ;
un moyen de variation de pression (10) le long de ladite ligne de commande (8) qui peut être activé/désactivé à la suite de la connexion/déconnexion de ladite paire de seconds organes de couplage (3a, 3b) au/du véhicule concerné,
dans lequel ledit moyen de variation (10) comprend un moyen de soupape (14) communiquant avec ledit réservoir (4, 17) à l'aide d'au moins une ligne de freinage (18) et par le fait que ladite au moins une ligne de commande (8) comprend une première ligne de commande (8a) connectée audit premier organe de couplage d'entraînement (2b) et une seconde ligne de commande (8b, 8c) pourvue d'au moins une première extension (8b) connectée au niveau d'une entrée dans ledit moyen de soupape (14) et d'au moins une seconde extension (8c) connectée au niveau d'une sortie dudit moyen de soupape (14), où l'une desdites première et seconde extensions (8b, 8c) communique avec ladite première ligne de commande (8a) et l'autre communique avec ledit second organe de couplage d'entraînement (3b), ledit moyen de soupape (14) étant adapté pour permettre le passage de l'air comprimé de ladite ligne de freinage (18) vers ladite seconde extension (8c) avec un rapport de pression prédéfini par rapport à la pression le long de ladite première extension (8b) **caractérisé par le fait que** ladite première et ladite paire de seconds organes de couplage (2a, 2b, 3a, 3b) sont associées à une remorque, où ladite paire de premiers organes de couplage (2a, 2b) peut être connectée à un premier type de véhicules de remorquage et ladite paire de seconds organes de couplage (3a, 3b) peut être connectée à un second type de véhicules de remorquage, **par le fait que** ledit au moins un réservoir (4, 17) comprend au moins un réservoir de remorque (17), où ladite ligne de freinage (18) est placée entre ledit réservoir de remorque (17) et ledit moyen de soupape (14) et **par le fait que** ladite première extension (8b) communique avec ledit second organe de couplage d'entraînement (3b) et que ladite seconde extension (8c) communique avec ladite première ligne de commande (8a) en aval dudit moyen de soupape (14).

10. Dispositif (1) selon une ou plusieurs des revendications 7 à 9, **caractérisé par le fait que** ledit moyen de soupape (14) est adapté pour envoyer à ladite seconde extension (8c) une pression correspondant à la pression présente le long de ladite première extension (8b) augmentée d'une valeur prédéfinie.

11. Dispositif (1) selon la revendication 10, **caractérisé par le fait que** ledit moyen de soupape (14) est du type d'une soupape-relais d'amplificateur.
